# EUROPEAN PATENT SPECIFICATION

(11) **EP 2 462 817 B1**
(45) Date of publication and mention of the grant of the patent: **07.05.2014**
(21) Application number: 11191388.5
(22) Date of filing: 30.11.2011
(51) Int. Cl.: A23L 1/212, A23L 1/214

(54) **Method for preparing mash and carrot mash**
Verfahren zur Herstellung von Püree und Karottenpüree
Procédé de fabrication de purée et purée de carottes

(30) Priority: 09.12.2010 NL 2005841
(43) Date of publication of application: 13.06.2012
(73) Proprietor: Provalor BV, 1645 RA Ursum (NL)
(72) Inventor: Nell, Pieter Coenraad, 1645 RA URSEM (NL); Kosters, Paulus Statius Reinier, 7316DR APELDOORN (NL)
(74) Representative: De Vries & Metman

(56) References cited:
- EP-A1- 0 710 450
- FR-A- 873 373
- US-A- 1 775 966
- US-A- 3 787 589
- US-A1- 2008 233 238
- TALCOTT S T ET AL: "ANTIOXIDANT CHANGES AND SENSORY PROPERTIES OF CARROT PUREE PROCESSED WITH AND WITHOUT PERIDERM TISSUE", JOURNAL OF AGRICULTURAL AND FOOD CHEMISTRY, AMERICAN CHEMICAL SOCIETY, US, vol. 48, no. 4, 1 January 2000 (2000-01-01), pages 1315-1321, XP001002778, ISSN: 0021-8561, DOI: DOI:10.1021/JF9910178

## Description

The invention relates to the production of carrot puree or beetroot puree. Known purees such as carrot puree are made by boiling and pureeing carrots and/or by treating the carrots enzymatically. In these known methods use is made of consumable carrots, which makes the carrot puree relatively expensive. In many industrial processes involving carrots the carrots are peeled. It has been found that those peels, which are usually disposed of as waste, can be used to produce puree under specific process conditions.

The method described in claim 1 is for making puree in accordance with the invention. The use of waste material such as peels in the production of the puree leads to extra proceeds because both the carrots and the puree generate value, which implies an advantage.

The production of carrot juice from carrot peels is known from EP 0710450. It has now been found that carrot peels can also be used to produce carrot puree in accordance with the method of claim 1. Carrot puree differs from carrot juice in its substantially greater viscosity. This greater viscosity makes for a better and/or fuller mouthfeel during consumption.

The method described in claims 2 and 3 is in accordance with an embodiment in which the peels are conditioned during the peeling process so that there is no need for any extra heating to convert the peels into puree.

The method described in claim 4 is in accordance with an embodiment in which the walls of the cells in the peels are partly destroyed, resulting in puree with a good texture and viscosity.

The method described in claim 5 is in accordance with an embodiment in which germination in the peels is inhibited prior to and during the centrifugation or decanting in order to partly preserve the puree and make it suitable for (temporary) storage.

The method described in claim 6 is in accordance with an embodiment in which the carrot puree is made suitable for storage/consumption.

The known, commercially available carrot puree has a high sacharose content, often of more than 2 percent by weight. This is comparable with the sacharose content of unprocessed carrots. The known carrot puree has low fructose and glucose contents and its sacharose content is more than half of the sum of the glucose and fructose contents. The disadvantage of the known carrot puree is that it tastes less sweet.

The aim of the carrot puree prepared by the method of the invention is to avoid this disadvantage. Because the carrot puree has a lower sacharose content relative to the fructose and glucose contents, it tastes sweeter at the same sugar content.

Making the carrot puree from carrot peels while keeping the carrot peels at a high temperature for some time causes part of the sacharose present to be converted into fructose and glucose. Making use of cheap peels that are converted into puree, and converting the sacharose into fructose and glucose at a low cost while heating the peels results in a cheap, sweet puree.

The invention will be elucidated below with reference to one or more embodiments of a method for making carrot puree. This method can be applied to beets and comparable products in more or less the same way.

Carrot peels that are produced in steam peeling carrots are used to make carrot puree from carrot peels. Carrots are peeled in the industrial processing of carrots. During the peeling, the carrots are stripped of their outer peel with the aid of a hot or a cold peeling process. In the cold peeling process the carrots are introduced into a drum that rotates at a high speed during the peeling. The outer wall of the drum is provided with openings, and knives, or carborundum granules on the inside wall of the drum remove the carrots' peels, and the peels are rinsed out through the openings and are then collected. For further processing into puree the peels are after the cold peeling process heated to at least 150° Celsius for a short time.

In the hot peeling process by means of steam peeling the carrots are heated in a pressure vessel for 10-50 seconds by steam having a pressure of more than 6 bar, which is in practice often 13 bar, and having a temperature of about 150-200 degrees Celsius. During the heating the carrot cooks directly beneath the peel's surface, which makes it easy to remove the peel. One way of removing the peel is to release the pressure in the pressure vessel for a few seconds, causing the pressure in the pressure vessel to drop quickly by more than 4 bar. This quick drop in pressure in the pressure vessel releases the peel from the carrot. The carrots are then passed over a brush conveyor belt, which brushes the peels, the majority of which have already been released from the carrots, from the carrots. The peeled carrots are now suitable for further use and are discharged.

The peels remaining after the hot peeling process have a temperature of about 70-80° Celsius and a pH value of about 5.7. The peeling and/or the quick drop in pressure has damaged the walls of the cells in the peels. The contents of the cells are a good breeding ground for bacilli. Any bacillus spores present may quickly germinate. To prevent this, a pH-reducing agent is added to the peels while they are still hot, to inhibit the growth of bacteria. In the cold peeling process the peels are treated in a similar way to prevent the growth of bacteria.

After the peeling the peels are passed through a decanter or a centrifuge. If the pH value of the peels is lower than 4.8, carrot juice is then formed. If the pH value exceeds 5.0, puree is formed, and at a pH value between 4.8 and 5.0 carrot juice or puree may be formed, depending on the conditions. If the pH value exceeds 5.0, carrot puree will be formed that will flow directly from the decanter or centrifuge. This carrot puree will have a good texture, which it will retain also in further processing. Some coarse particles will also be released from the centrifuge or decanter; they are to be discharged separately.

To preserve the carrot puree further it is acidified with a pH-reducing agent to a pH value between 3.0 and 4.6, for example using lemon juice, with which the carrot puree will retain its viscous structure. The carrot puree can also be pasturised or sterilised to kill any remaining germs.

In general terms, the produced carrot puree differs from carrot pulp and carrot juice as follows.

| | puree | pulp | juice |
|---|---|---|---|
| dry matter (%) | 12 | 25 | 8 |
| description | thick liquid | semisolid | watery liquid |
| viscosity (mPa.s) | 50-100 | indeterminate | 2-5 |
| sugar content (%) | 4-6 | 5-7 | 6-8 |
| residue on 0.5 mm sieve (%) | 10 | 100 | < 0.5 |

The produced carrot puree was analysed and compared with commercially available puree produced at an unknown time using carrots of an unknown composition.

First sample: the first sample to be analysed was of a commercially available carrot puree made according to the known method using an enzymatic process, the sample having a pH of 4.6 during the analysis.

Second sample: then a sample was analysed that consisted of carrot puree made according to the method described above with the aid of the mechanical centrifugation process, with the carrots being stripped of their peels by means of steam peeling and the puree being made by centrifuging the carrot peels.

The results of the analysis of the sugar contents of the two samples are given in the following table, the concentrations of the analyses of the two samples being based on identical Brix values.

| Percentages by weight | First sample, commercially available product, Brix 8 | Second sample, according to the invention, Brix 20 | Second sample, according to the invention, Brix 8 |
|---|---|---|---|
| Maltose | < 0.2 % | < 0.2 % | < 0.2 % |
| Sacharose | 3.6 % | < 0.2 % | < 0.2 % |
| Glucose | 1.3 % | 1.3 % | 0.5 % |
| Fructose | 1.1 % | 2.0 % | 0.8 % |
| Rhamnose | < 0.2 % | < 0.2 % | < 0.2 % |
| Xylose | < 0.2 % | < 0.2 % | < 0.2 % |

The carrot puree obtained by the method of the invention was found to contain hardly any sacharose; this substance was probably converted into the sweeter fructose.

## Claims

1. A method for making carrot puree or beetroot puree, **characterised in that** the puree is made from the peels of carrots or beetroot by peeling the carrots or beetroot at the same time as or prior to briefly heating the peels to a temperature of at least 150° Celsius, separating the peels from the carrots or beetroot while the peels are brought to or kept at a pH value higher than 5.0, after which the peels are centrifuged in a centrifuge or decanted in a decanter.

2. A method according to claim 1 in which the carrots or beetroot are peeled by means of steam peeling, the products to be peeled being heated by steam to 150° Celsius for at least 10 seconds.

3. A method according to claim 1 in which the carrots or beetroot are peeled by means of steam peeling, the products to be peeled being heated by steam having a pressure of more than 6 bar to a temperature of about 150-200 °C for 10-50 seconds.

4. A method according to claim 2 or claim 3, the carrots or beetroot being pressurised during the steam peeling and then undergoing a decrease in pressure of at least 4 bar within a few seconds.

5. Methods according to one of claims 1, 2, 3 or 4, the peels being acidified prior to the centrifugation or decanting while the pH value remains at least 5.0.

6. A method according to one of claims 1, 2, 3, 4 or 5, the puree being acidified immediately after the centrifugation or decanting and being brought to a pH value lower than 4.8.

## Patentansprüche

1. Verfahren zum Herstellen von Karottenpüree oder Rote-Bete-Püree, **dadurch gekennzeichnet, dass** das Püree aus Schalen von Karotten oder Rote Beten gemacht ist durch Schälen der Karotten oder Rote Beten zu gleichen Zeit wie oder vor einem kurzen Erhitzen der Schalen auf eine Temperatur von wenigstens 150° Celsius, Separieren der Schalen von den Karotten oder Rote Beten, wobei die Schalen auf einen pH Wert von größer als 5.0 gebracht oder gehalten werden, wonach die Schalen in einer Zentrifuge zentrifugiert oder in einem Dekanter dekantiert werden.

2. Verfahren gemäß Anspruch 1, wobei die Karotten oder Rote Beten geschält werden mittels Dampfschälens, wobei die zu schälenden Produkte durch Dampf auf 150° Celsius für wenigstens 10 Sekunden erhitzt werden.

3. Verfahren gemäß Anspruch 1, wobei die Karotten oder Rote Beten geschält werden mittels Dampfschälens, wobei die zu schälenden Produkte durch Dampf mit einem Druck von mehr als 6 bar auf eine Temperatur von etwa 150-200 °C für 10-50 Sekunden erhitzt werden.

4. Verfahren gemäß Anspruch 2 oder Anspruch 3, wobei die Karotten oder Rote Beten während des Dampfschälens mit Druck beaufschlagt werden und dann einer Druckverringerung von wenigstens 4 bar innerhalb weniger Sekunden unterworfen werden.

5. Verfahren gemäß einem der Ansprüche 1, 2, 3 oder 4, wobei die Schalen angesäuert werden vor der Zentrifugierung oder dem Dekanten, wobei der pH Wert bei wenigstens 5.0 verbleibt.

6. Verfahren gemäß einem der Ansprüche 1, 2, 3, 4 oder 5, wobei das Püree angesäuert wird sofort nach der Zentrifugierung oder dem Dekanten und auf einen pH-Wert kleiner als 4.8 gebracht wird.

## Revendications

1. Procédé de fabrication de purée de carotte ou de purée de betterave, **caractérisé en ce que** la purée est fabriquée à partir des pelures de carotte ou de betterave en épluchant les carottes ou les betteraves pendant ou avant de chauffer brièvement les pelures à une température d'au moins 150 °C, en séparant les pelures des carottes ou des betteraves alors que les pelures sont amenées ou maintenues à une valeur de pH supérieure à 5,0, après quoi les pelures sont centrifugées dans une centrifugeuse ou décantées dans un décanteur.

2. Procédé selon la revendication 1 dans lequel les carottes ou les betteraves sont épluchées au moyen d'un épluchage à la vapeur, les produits à éplucher étant chauffés à la vapeur à 150 °C pendant au moins 10 secondes.

3. Procédé selon la revendication 1 dans lequel les carottes ou les betteraves sont épluchées au moyen d'un épluchage à la vapeur, les produits à éplucher étant chauffés par une vapeur ayant une pression supérieure à 6 bar à une température d'environ 150 à 200 °C pendant 10 à 50 secondes.

4. Procédé selon la revendication 2 ou la revendication 3, les carottes ou les betteraves étant mises sous pression pendant l'épluchage à la vapeur puis soumises à une chute de pression d'au moins 4 bar en quelques secondes.

5. Procédés selon l'une des revendications 1, 2, 3 ou 4, les pelures étant acidifiées avant la centrifugation ou la décantation tandis que la valeur du pH reste d'au moins 5,0.

6. Procédé selon l'une des revendications 1, 2, 3, 4 ou 5, la purée étant acidifiée immédiatement après la centrifugation ou la décantation et étant amenée à une valeur de pH inférieure à 4,8.
